# EUROPÄISCHE PATENTSCHRIFT

(11) **EP 1 496 289 B1**
(45) Veröffentlichungstag und Bekanntmachung des Hinweises auf die Patenterteilung: **19.10.2011**
(21) Anmeldenummer: 03020329.3
(22) Anmeldetag: 09.09.2003
(51) Int. Cl.: F16F 15/139

(54) **Nasslaufender Torsionsschwingungsdämpfer**
Wet-running torsional vibration damper
Amortisseur de vibrations de torsion immergé dans un liquide

(30) Priorität: 07.07.2003 EP 03015283
(43) Veröffentlichungstag der Anmeldung: 12.01.2005
(73) Patentinhaber: BorgWarner, Inc., Auburn Hills, MI 48326-2872 (US)
(72) Erfinder: Kroll, Jürgen, 68775 Ketsch (DE); Bastel, Norbert, 68794 Obernhausen (DE); Ebner, Till, 64319 Pfungstadt (DE)
(74) Vertreter: Neunert, Peter Andreas

(56) Entgegenhaltungen:
- EP-A- 0 641 956
- EP-A- 0 826 899
- EP-A- 0 922 878
- DE-A- 4 327 017
- DE-A- 4 418 390
- DE-A- 19 602 459
- US-A- 5 597 355
- PATENT ABSTRACTS OF JAPAN Bd. 1996, Nr. 02, 29. Februar 1996 (1996-02-29) & JP 7 259925 A (UNISIA JECS CORP; others: 01), 13. Oktober 1995 (1995-10-13)

## Beschreibung

Die Erfindung betrifft einen Torsionsschwingungsdämpfer gemäß dem Oberbegriff des Patentanspruchs 1.

Nasslaufende Torsionsschwingungsdämpfer sind aus dem Stand der Technik in einer Vielzahl von Abwandlungen bekannt. Ein Torsionsschwingungsdämpfer, wie er aus dem betriebsinternen Stand der Technik bekannt ist, umfasst ein mit einer Antriebseinrichtung koppelbares Primärelement sowie ein relativ zu diesem Primärelement drehauslenkbares, abtriebsseitig koppelbares korrespondierendes Sekundärelement. Gattungsgemäß ist eine zwischen Primärelement und Sekundärelement wirksame Reibvorrichtung vorgesehen. Diese Reibvorrichtung erzeugt eine Reibung zwischen An- und Abtrieb.

Gemäß dem Stand der Technik ist diese Reibvorrichtung in der Art einer nasslaufenden Reiblamelle ausgeführt. Weiterhin ist ein gattungsgemäßer Torsionsschwingungsdämpfer aus der EP 0 826 899 A bekannt.

Der Erfindung liegt die Aufgabe zu Grunde, einen Torsionsschwingungsdämpfer der gattungsgemäßen Art derart weiterzubilden, dass dieser aufwandsgünstig herstellbar ist.

Diese Aufgabe wird bei einem nasslaufenden Torsionsschwingungsdämpfer, der gattungsgemäßen Art durch die Merkmale des kennzeichnenden Teils des Patentanspruchs 1 gelöst.

Vorteilhafte Ausführungen und Weiterbildungen der Erfindung sind in den Unteransprüchen angegeben.

Es ist vorgesehen, dass das Primärelement und/oder das Sekundärelement Kulissenöffnungen aufweist, in welche jeweils wenigstens ein Reibklotz der Reibvorrichtung in der Art eines Kulissensteins eingesetzt ist, wobei sich der wenigstens eine Reibklotz reibschlüssig gegen das korrespondierende Sekundärelement oder Primärelement abstützt. Der wenigstens eine Reibklotz erzeugt dann eine Reibung zwischen Primärelement und Sekundärelement, wenn er an den jeweiligen umfangsrichtungsseitigen Enden der entsprechenden Kulissenöffnung anstößt.

Erfindungsgemäß ist vorgesehen, dass Reibklötze mit einheitlichen Reibklotzlängen und Kulissenöffnungen mit unterschiedlichen Fensterlängen vorgesehen sind. Durch diese Maßnahme wird erreicht, dass die jeweiligen Reibklötze in den entsprechenden Kulissenöffnungen in unterschiedlichem Maße spielbehaftet sind und gegebenenfalls erst nacheinander in Reibeingriff gelangen. Selbstverständlich kann im besonderen Anwendungsfall auch eine einheitliche (identische) freie Weglänge der jeweiligen Reibklötze in den jeweiligen Kulissenöffnungen gewählt werden. Dies gilt selbstverständlich auch bei unterschiedlichen Reibklotzlängen und Fensterlängen.

Die Reibklötze der vorstehend genannten Art weisen grundsätzlich einen Schichtaufbau wie eine Reiblamelle konventioneller Art auf, nämlich einen metallischen Kern mit organischen Reibbelägen. Gemäß der Erfindung ist es vorgesehen, dass die Reibklötze Kunststoff enthalten oder vollständig aus Kunststoff gefertigt sind. Als Kunststoffe kommen solche in Betracht, welche im Einsatzbereich hochfest sowie öl- und hitzebeständig sind. Dabei hat sich als besonders vorteilhaft herausgestellt, wenn die Reibklötze ein Polyamid beinhalten.

Erfindungsgemäß ist vorgesehen, dass die Reibklötze Glasfasern beinhalten. Dadurch werden die Reibklötze hochfest.

Obwohl Kulissenöffnungen grundsätzlich auch in radialer Richtung versetzt angeordnet sein können, hat es sich als besonders vorteilhaft herausgestellt, wenigstens zwei der Kulissen - öffnungen in Umfangsrichtung und damit konzentrisch zur Drehachse von Primär- und Sekundärelement hintereinanderliegend anzuordnen. Die jeweiligen Reibklötze stützen sich in diesem Fall gegen gemeinsame Reibflächen am korrespondierenden Sekundär- oder Primärelement ab.

Um eine konstante Grundreibung bei jeglicher Drehauslenkung des Sekundärelements gegenüber dem Primärelement zu gewährleisten, ist erfindungsgemäß vorgesehen, dass die Gesamtlänge der in wenigstens eine Kulissenöffnung eingesetzten Reibklötze identisch mit der Fensterlänge der wenigstens einen Kulissenöffnung ist. Diese Ausführungsvariante zeigt noch einmal deutlich, dass sich in einfacher Weise reibungsgedämpfte Torsionsschwingungsdämpfer herstellen lassen, bei der sich die Reibungsdämpfung in Abhängigkeit von der Drehauslenkung des Sekundärelements gegenüber dem Primärelement in nahezu beliebiger Weise ändert.

Erfindungsgemäß ist weiter vorgesehen, dass wenigstens eine der Kulissenöffnungen als Durchgangsöffnung ausgeführt ist und dass der wenigstens eine Reibklotz gegenüberliegende Reibflächen aufweist, mittels derer er sich gegen das korrespondierende Sekundärelement oder das korrespondierende Primärelement reibschlüssig abstützt. Alternativ oder zusätzlich kann auch wenigstens eine der Kulissenöffnungen als Sackloch ausgeführt sein. Der wenigstens eine Reibklotz weist in diesem Fall eine auf dem Boden des Sacklochs aufsetzende Gleitfläche auf, auf welcher der Reibklotz reibungsarm gleitet sowie eine dieser Gleitfläche gegenüberliegende Reibfläche, mittels derer sich der Reibklotz gegen das korrespondierende Sekundär- oder Primärelement reibschlüssig abstützt. Diese vorstehend beschriebenen Ausführungsvarianten zeichnen sich durch ihre einfache und damit kostengünstige Herstellbarkeit aus.

Eine besonders vorteilhafte Ausgestaltung der Erfindung sieht vor, dass das Sekundärelement ein im Wesentlichen ringförmiges, antriebsseitiges Halteblech mit einer im Wesentlichen radial verlaufenden Bodenfläche umfasst, welche wenigstens eine der Kulissenöffnungen aufweist. Ein derartiges antriebsseitiges Halteblech ist auch bei Torsionsschwingungsdämpfern ohne Reibvorrichtung vorhanden, so dass eine Änderung nur dahingehend erforderlich ist, entsprechende Kulissenöffnungen in dieses Halteblech einzubringen. Eine kostengünstige Herstellung ist damit zweifelsohne gegeben.

In Ausgestaltung dieser Ausführungsvariante ist vorgesehen, dass das Primärelement ein ringförmiges Stützblech aufweist, welches antriebsseitig an das antriebsseitige Halteblech anschließt und an dem sich eine der Reibflächen des wenigstens einen Reibklotzes abstützt. Fernerhin weist das Primärelement eine Nabenplatte auf, welche abtriebsseitig an das antriebsseitige Halteblech anschließt, und an dem sich die andere der beiden Reibflächen des wenigstens einen Reibklotzes abstützt. Bei dieser Ausgestaltung wird sich zunutze gemacht, dass Torsionsschwingungsdämpfer herkömmlicher Bauart eine vorstehend angegebene Nabenplatte ohnehin aufweisen. Als zusätzliches Bauelement wird nunmehr lediglich das vorstehend genannte Stützblech eingeführt, welches die Aufgabe hat, die Reibklötze zu halten sowie einen entsprechenden Reibschluss zu erzeugen.

Die Erzeugung eines Reibschlusses erfolgt dadurch, dass zwischen Stützblech und Nabenplatte eine Axialkraft wirkt. Diese Axialkraft kann in einfacher Weise durch die nachstehend beschriebene Ausgestaltung des Torsionsschwingungsdämpfers aufgebracht werden. So weist das Stützblech zu diesem Zweck Axialstege und an diese Axialstege anschließende Radialstege auf, welche das antriebsseitige Halteblech und die Nabenplatte axial durchsetzen. Weiterhin ist eine Tellerfeder vorgesehen, welche zwischen der Nabenplatte und den Radialstegen angeordnet ist. Diese Tellerfeder drückt das Stützblech gegen die Nabenplatte und erzeugt dabei zwischen Stützblech und den entsprechenden Reibklötzen sowie zwischen den entsprechenden Reibklötzen und der Nabenplatte einen Reibschluss.

Üblicherweise ist noch ein Sicherungsring vorgesehen, welcher zwischen den Radialstegen und der Tellerfeder angeordnet ist und welcher die Tellerfeder reibschlusserzeugend hält.

Fertigungstechnisch hat es sich als besonders vorteilhaft herausgestellt, die Reibklötze mittels eines Spritzgussverfahrens herzustellen.

Idealerweise sind die Reibklötze aus Polyamid mit einem Glasfaseranteil zwischen 40 % und 60 %, vorzugsweise 50 %.

Die Erfindung wird nunmehr anhand der Zeichnung beschrieben. Es zeigen:
- Figur 1: ein erstes Ausführungsbeispiel eines erfindungsgemäßen nasslaufenden Torsionsschwingungsdämpfers in Explosionsdarstellung,
- Figur 2: Stützblech, antriebsseitiges Halteblech und Reibklötze des Torsionsschwingungsdämpfers gemäß der Figur 1 nach der Montage in Draufsicht,
- Figur 3: ein zweites Ausführungsbeispiel eines erfindungsgemäßen nasslaufenden Torsionsschwingungsdämpfers im Radialhalbschnitt,
- Figur 4: den nasslaufenden Torsionsschwingungsdämpfer gemäß der Figur 3 im Axialhalbschnitt,
- Figur 5: ein erstes Ausführungsbeispiel eines antriebsseitigen Halteblechs mit in entsprechende Kulissenöffnungen eingesetzten Reibklötzen eines Torsionsschwingungsdämpfers gemäß den Figuren 1 bis 4,das nicht in den Schutzbereich des Anspruchs 1 fällt.
- Figur 6: eine Übertragungskennlinie eines nasslaufenden Torsionsschwingungsdämpfers mit antriebsseitigem Halteblech mit Kulissenöffnungen und Reibklötzen entsprechend der Figur 5,
- Figur 7: ein zweites Ausführungsbeispiel eines antriebsseitigen Halteblechs mit in entsprechende Kulissenöffnungen eingesetzten Reibklötzen eines Torsionsschwingungsdämpfers gemäß den Figuren 1 bis 4, das nicht in den Schutzbereich des Anspruchs 1 fällt,
- Figur 8: ein drittes Ausführungsbeispiel eines antriebsseitigen Halteblechs mit in entsprechende Kulissenöffnungen eingesetzten Reibklötzen eines Torsionsschwingungsdämpfers gemäß den Figuren 1 bis 4.

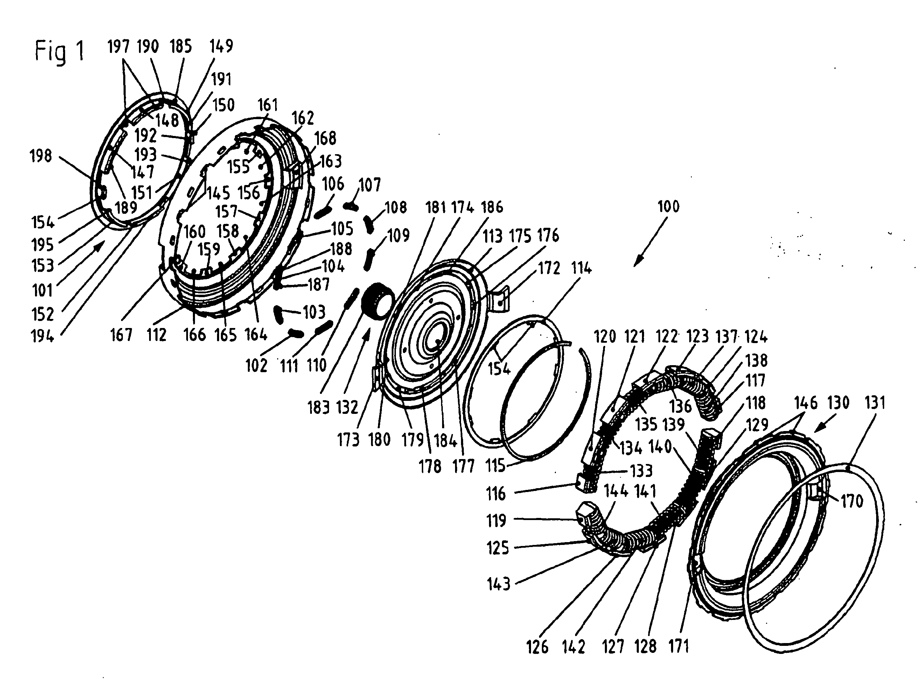

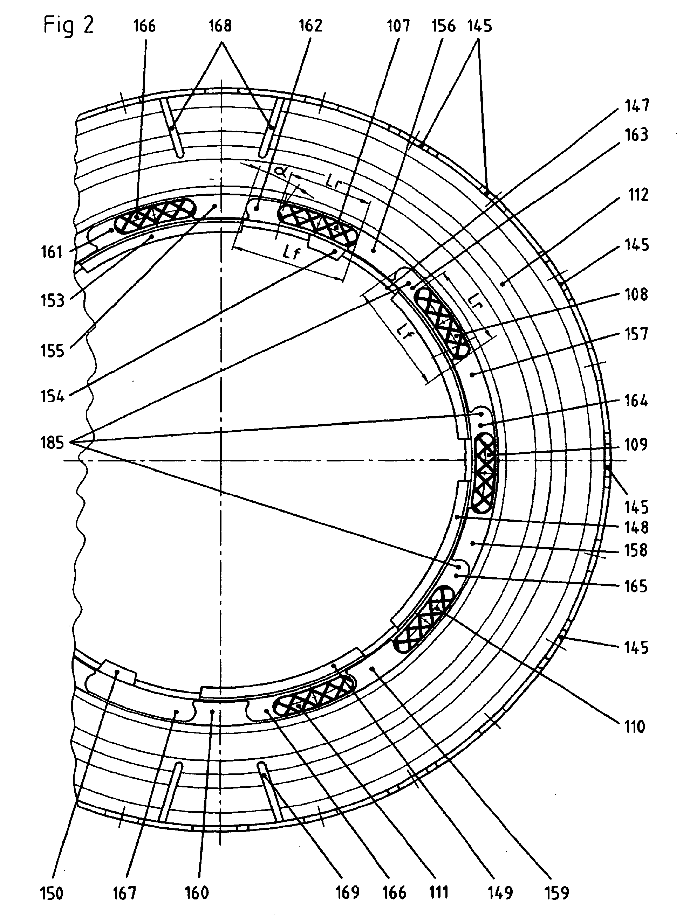

Den Figuren 1 und 2 entnimmt man ein erstes Ausführungsbeispiel eines nasslaufenden Torsionsschwingungsdämpfers 100. Dieser Torsionsschwingungsdämpfer 100 umfasst als wesentliche Bestandteile ein mit einer nicht dargestellten Antriebseinrichtung koppelbares Primärelement, welches in an sich bekannter Art als Nabenplatte 113 ausgebildet ist sowie ein relativ zu diesem drehauslenkbares, federelastisch mit dem Primärelement gekoppeltes, einen Abtrieb bildendes Sekundärelement, welches im Wesentlichen aus einem antriebsseitigen Halteblech 112 und einem abtriebsseitigen Halteblech 130 gebildet ist. Weiterhin ist eine Reibvorrichtung vorgesehen, welche zwischen dem Primärelement und dem Sekundärelement wirkt. Die federelastische Kopplung zwischen Primär- und Sekundärelement sowie die erfindungsgemäße Ausgestaltung der zwischen Primärelement und Sekundärelement wirksamen Reibvorrichtung werden nachfolgend in Detail beschrieben.

Am einfachsten lässt sich die Funktionsweise des erfindungsgemäßen nasslaufenden Torsionsschwingungsdämpfers erläutern, wenn man dessen Montage im Einzelnen betrachtet:
Ausgangselement bildet ein Stützblech 101 in der Form eines Rings. Am Innenumfang eines in der Art einer Scheibe ausgebildeten Grundkörpers sind eine Mehrzahl axial ausgerichteter Axialstege 147, 148, 149, 150, 151, 152, 153, 154 vorgesehen, welche endseitig radial geknickt, sogenannte Radialstege 189, 190, 191, 192, 193, 194, 195, 196 verlaufen.

Auf dieses Stützblech 101 wird das vorstehend erwähnte antriebsseitige ringförmige Halteblech 112 aufgesetzt. Die Axial- und Radialstege 147, 148, 149, 150, 151, 152, 153, 154; 189, 190, 191, 192, 193, 194, 195, 196 durchgreifen das antriebsseitige Halteblech 112 axial.

Die Außenflächen der Axialstege 147, 148, 149, 150, 151, 152 153, 154 schließen dabei im Wesentlichen formschlüssig an den Innenumfang des antriebsseitigen Halteblechs 112 an, wie sich insbesondere der Figur 2 entnehmen lässt.

Das antriebsseitige Halteblech 112 weist im vorliegenden Fall am Innenumfang 10 zwischen diesen ebenfalls zehn Radialstege 155, 156, 157, 158, 159, 160 bildende Ausnehmungen auf. Diese Ausnehmungen bilden (in Verbindung mit dem Außenumfang des Stützblechs 101 bzw. der Außenwandung der Axialstege 147, 148, 149, 150, 151, 152, 153, 154 des Stützblechs 101 Öffnungen, welche nachfolgend als Kulissenöffnungen 161, 162, 163, 164, 165, 166, 167 bezeichnet sind.

Diese Kulissenöffnungen 161, 162, 163, 164, 165, 166, 167 dienen zur Aufnahme von kulissensteinartigen Reibklötzen 102, 103, 104, 105, 106, 107, 108, 109, 110, 111 (Figur 2).

Diese Reibklötze 102, 103, 104, 105, 106, 107, 108, 109, 110, 111 sind in Umfangsrichtung in den Kulissenöffnungen 161, 162, 163, 164, 165, 166, 167 anschlagsbegrenzt beweglich.

Auf die in der Figur 2 dargestellte Anordnung wird in einem weiteren Schritt die vorerwähnte Nabenplatte 113 aufgesetzt. Die Radialstege 155, 156, 157, 158, 159, 160 durchgreifen eigens dafür in der Nabenplatte 113 vorgesehene Axialstegdurchführöffnungen 174, 175, 176, 177, 178, 179, 180, 181. Die Axialstege 147, 148, 149, 150, 151, 152, 153, 154 greifen dabei derart in die Axialstegdurchführöffnungen 174, 175, 176, 177, 178, 179, 180, 181 ein, dass eine drehfeste Verbindung in der Art einer Verzahnung 197 entsteht.

Die axiale Erstreckung der Reibklötze 102, 103, 104, 105, 106, 107, 108, 109, 110, 111 ist so gewählt, dass die sich gegenüberliegenden Radialflächen gegen entsprechende Radialflächen des Stützblechs 101 und der Nabenplatte 113 abstützen. Diese Kontaktflächen bildende Radialflächen bilden gleichzeitig die Reibflächen 185, 186, 187, 188 der erfindungsgemäßen Reibvorrichtung.

Die Nabenplatte 113 wird nunmehr axialkraftbeaufschlagt gegen das Stützblech 101 gehalten. Diese Axialkraft wird durch eine Tellerfeder 114 aufgebracht, welche mittels eines Sicherungsrings 115 zwischen den Radialstegen 189, 190, 191, 192, 193, 194, 195, 196 und dem Stützblech 101 kraftübertragend gehaltert ist. In Nabenplatte 113 ist zusammen mit dem Stützblech 101 gegenüber dem antriebsseitigen Halteblech 112 um einen Winkel verdrehbar, solange die jeweiligen Reibklötze 102, 103, 104, 105, 106, 107, 108, 109, 110', 111 nicht an den jeweiligen Radialstegen 155, 156, 157, 158, 159, 160 anstehen. Der Winkel, um welchen eine freie Verdrehung möglich ist, wird als Freiwinkel bezeichnet. Wird dieser Freiwinkel überschritten, so muss die zwischen den Reibflächen 155, 156, 157, 158 wirkende Reibkraft überwunden werden.

Weisen - wie im vorliegenden Fall gemäß der Figuren 1 und 2 - alle Kulissenöffnungen 161, 162, 163, 164, 165, 166, 167 gleiche Umfangslängen L_{f} auf und haben die Reibklötze 102, 103, 104, 105, 106, 107, 108, 109, 110, 111 unterschiedliche Umfangslängen Lᵣ₀. Lᵣ₁, so haben die Reibklötze 102, 103, 104, 105, 106, 107, 108, 109, 110, 111 in den jeweiligen Kulissenöffnungen 161, 162, 163, 164, 165, 166, 167 unterschiedliches Spiel, was sich in unterschiedlichen Freiwinkeln α₀, α₁ ausdrückt. Mit zurücknehmenden Verdrehwinkel ist daher eine zunehmende Reibkraft zu überwinden.

Neben der vorstehend beschriebenen Reibvorrichtung weist der Torsionsschwingungsdämpfer 100 auch eine parallel zu dieser Reibvorrichtung wirksame Federkopplung an sich bekannter Art auf. Konkret sind zwischen zwei radial gegenüberliegend angeordneten Abstützbügeln 168, 169 am antriebsseitigen Halteblech 112 eine Mehrzahl von Schraubenfedern 133, 134, 135, 136, 137, 138, 139, 140, 141, 142, 143, 144 in Umfangsrichtung angeordnet. Diese Schraubenfedern 133, 134, 135, 136, 137, 138, 139, 140, 141, 142, 143, 144 werden in an sich bekannter Art mittels sogenannter Gleitschuhe 116, 117, 118, 119, 120, 121, 122, 123, 124, 125, 126, 127, 128, 129 gehalten, welche sich reibungsarm an der Innenwandung des Außenumfangs radial und an der Radialfläche des antriebsseitigen Halteblechs 112 axial abstützen. Weiterhin stützen sich diese Gleitschuhe 116, 117, 118, 119, 120, 121, 122, 123, 124, 125, 126, 127, 128, 129 in axialer Richtung an einer Radialfläche eines abtriebsseitigen Halteblechs 130 ab, welches zu den Abstützbügeln 168, 169 des antriebsseitigen Halteblechs 112 korrespondierende und axial gegenüberliegend angeordnete Abstützbügel 170, 171 aufweist und welches mittels einer Verzahnung 145, 146 drehfest mit diesem antriebsseitigen Halteblech 112 verbunden ist. Die axiale Fixierung des abtriebsseitigen Halteblechs 130 an dem antriebsseitigen Halteblech 112 erfolgt mittels einer Tellerfeder 131.

Die Nabenplatte 113 weist korrespondierend zu den Abstützbügeln 168, 169, 170, 171 des antriebsseitigen Halteblechs 112 und des abtriebsseitigen Halteblechs 130 in gegenüberliegender Anordnung zwei Abstützbügel 172, 173 auf.

Verdreht man die Nabenplatte 113 mittels einer über eine Steckverzahnung 183, 184 mit der Nabenplatte 113 verbundenen Eingangsnabe 132, so werden die Abstützbügel 172, 173 gegen zwei der endseitigen Gleitschuhe 116, 117, 118, 119 und die Abstützbügel 168, 169, 170, 171 der beiden antriebsseitigen und abtriebsseitigen Haltebleche 112, 130 gegen die anderen endseitigen Gleitschuhe 116, 117, 118, 119 gedrückt, so dass ein über die Nabenplatte 113 eingekoppeltes Drehmoment nur federgedämpft an die beiden das Sekundärelement bildenden Haltebleche 112, 130 übertragen wird.

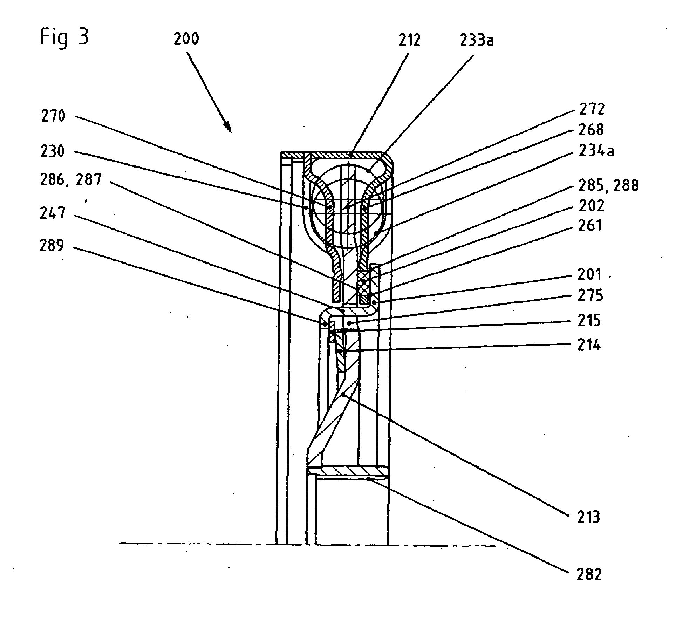

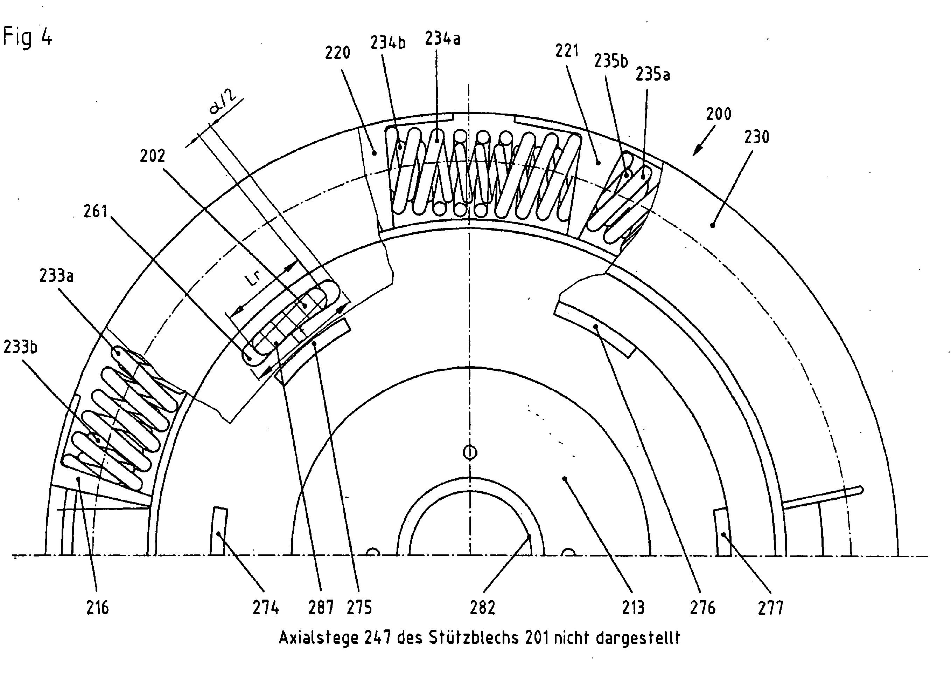

Eine zweite Ausführungsvariante eines erfindungsgemäßen Torsionsschwingungsdämpfers 200 entnimmt man den Figuren 3 und 4. Wie im vorstehend beschriebenen Ausführungsbeispiel umfasst der Torsionsschwingungsdämpfer ein antriebsseitiges Halteblech 212 und ein abtriebsseitiges Halteblech 230, welche zusammen das Sekundärelement bilden sowie ein Stützblech 201, welches zusammen mit einer Nabenplatte 213 ein Primärelement bildet.

Auf vorliegenden Ausführungsbeispiel sind eine Mehrzahl von Reibklötzen 202 vorgesehen, welche in entsprechenden Kulissenöffnungen 261 angeordnet sind und welche mittels Tellerfeder 214 und Sicherungsring 215 reibschlüssig gegen das Stützblech 201 und die Nabenplatte 213 gehalten werden. Die entsprechenden Reibflächen sind im vorliegenden Ausführungsbeispiel durch die Bezugszeichen 285, 286, 287, 288 gekennzeichnet. Die entsprechend dem vorstehenden Ausführungsbeispiel ebenfalls vorhandenen Axialstege und Radialstege sowie die in der Nabenplatte vorgesehenen Axialstegdurchführöffnungen sind in den Zeichnungen mit den Bezugszeichen 247, 289, 274, 275, 276, 277 gekennzeichnet.

Die Reibvorrichtung des vorliegenden Beispiels unterscheidet sich von der gemäß den Figuren 1 und 2 dadurch, dass die Kulissenöffnungen 261 nunmehr alleine durch entsprechende Durchbrüche im antriebsseitigen Halteblech 212 gebildet sind.

Auch die federelastische Kopplung zwischen Primärelement (Nabenplatte 213, Stützblech 201) und Sekundärelement (antriebsseitiges Halteblech 212, abtriebsseitiges Halteblech 230) ist im Wesentlichen in vorstehend beschriebener Weise ausgeführt. Den Figuren 3 und 4 entnimmt man insbesondere die Abstützbügel 268, 270, 272 der beiden Haltebleche 212, 230 und der Nabenplatte 213, an welchen sich die endseitigen Gleitschuhe 216 abstützen.

Abweichend vom vorangegangenen Ausführungsbeispiel ist die zwischen zwei Gleitschuhen 216, 220, 212 vorgesehene federelastische Kopplung nicht mittels einfacher Schraubenfedern realisiert, vielmehr ist hier ein koaxial angeordnetes Schraubenfederpaar, bestehend aus Außenfeder 233a, 234a, 235a und Innenfeder 233b, 234b, 235b vorgesehen.

Der Vollständigkeit halber ist die Fensterlänge L_{f}, die Reibklotzlänge Lᵣ sowie der Freiwinkel α der Reibvorrichtung in der Figur 4 eingezeichnet.

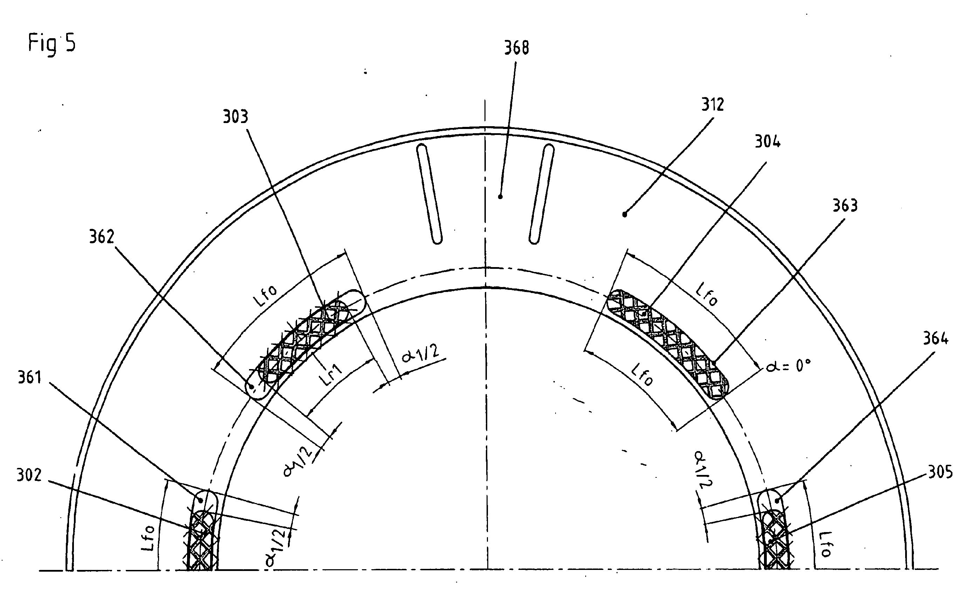

Der Figur 5 entnimmt man ein antriebsseitiges Halteblech 312, welches sechs Kulissenöffnungen 361, 362, 363, 364 aufweist. Alle Kulissenöffnungen 361, 362, 363, 364 weisen im Unterschied zur erfindungsgemäßen Lösung dieselbe Fensterlänge L_{f0} auf. In diese Kulissenöffnungen 361, 362, 363, 364 sind Reibklötze 302, 302, 304, 305 mit ebenfalls abweichend zur erfindungsgemäßen Lösung unterschiedlicher Reibklotzlänge Lᵣ₀, Lᵣ₁ eingesetzt.

Zwei der Reibklötze 304 besitzen eine Reibklotzlänge Lᵣ₀, welche identisch mit der Fensterlänge L_{f0} ist. Vier Reibklötze 302, 303, 304, 305 weisen eine Reibklotzlänge Lᵣ₀ auf, welche kleiner als die Fensterlänge L_{f0} ist.

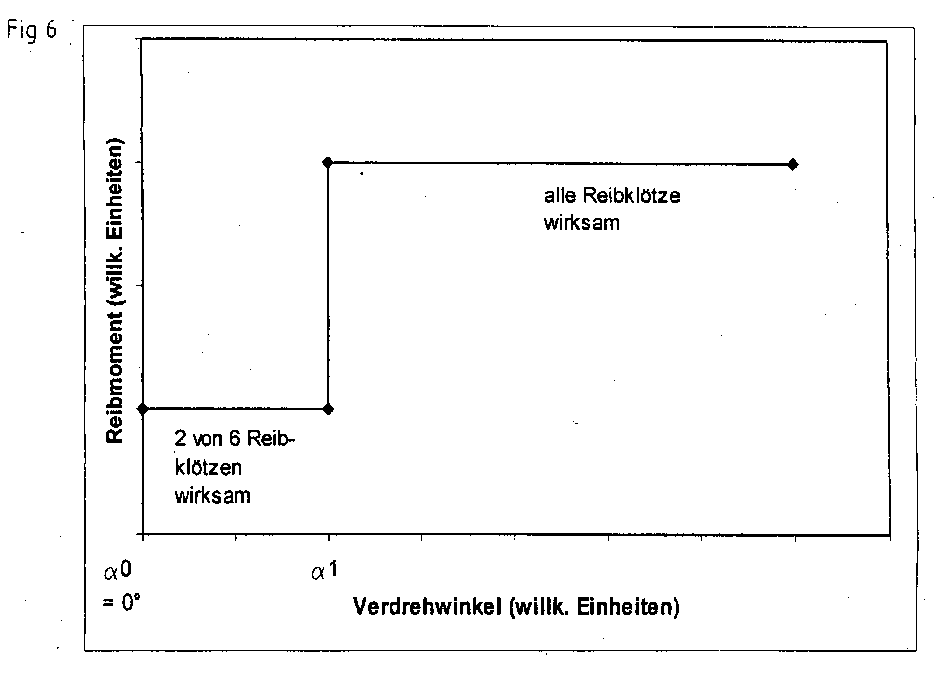

Ein Torsionsschwingungsdämpfer mit einer derartigen Reibvorrichtung weist die in Figur 6 dargestellte Übertragungskennlinie auf. Bei einem Verdrehwinkel, welcher kleiner als der Freiwinkel α₁ der spielbehafteten Reibklötze 302, 303, 305 ist, wirkt lediglich das Reibmoment der formschlüssig in die Kulissenöffnungen 363 eingesetzten Reibklötze 304. Bei einem größeren Verdrehwinkel sind alle Reibklötze 302, 303, 304, 305 wirksam.

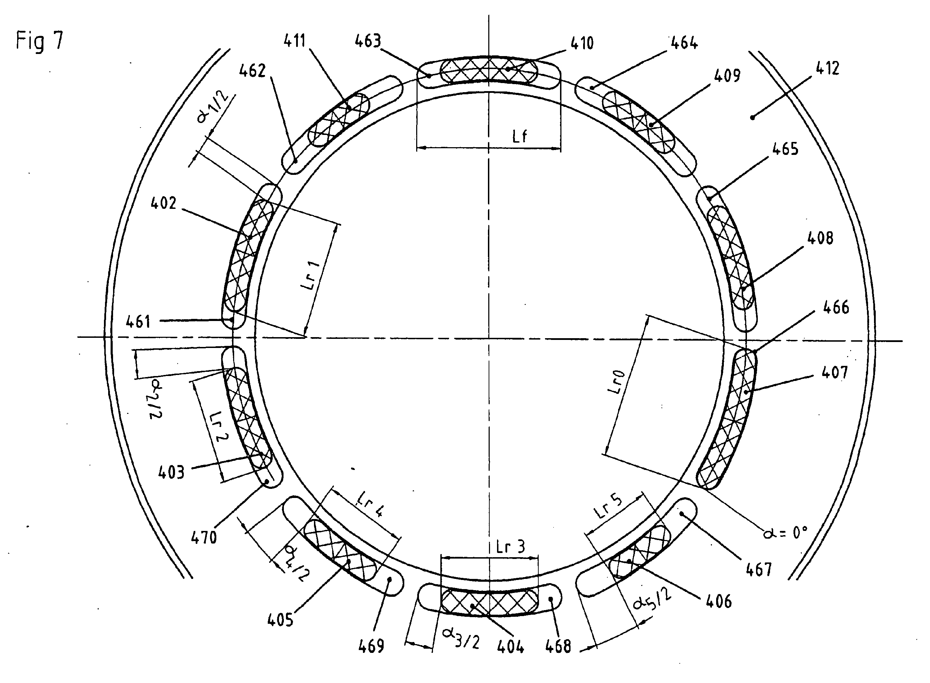

Die Figur 7 zeigt ein weiteres von der erfindungsgemäßen Lösung abweichendes Ausführungsbeispiel eines antriebsseitigen Halteblechs 412 mit zehn Kulissenöffnungen 461, 462, 463, 464, 465, 466, 467, 468, 469, 470, in welche die Reibklötze 402, 403, 404, 405, 406, 407, 408, 409, 410, 411 eingesetzt sind. In diesem Ausführungsbeispiel wurde eine einheitliche Fensterlänge L_{f} der Kulissenöffnungen 461, 462, 463, 464, 465, 466, 467, 468, 469, 470 gewählt. Die Reibklötze 402, 403, 404, 405, 406, 407, 408, 409, 410, 411 weisen unterschiedliche Reibklotzlängen Lᵣ₀, Lᵣ₁, Lᵣ₂, Lᵣ₃, Lᵣ₄, Lᵣ₅ auf, so dass unterschiedliche Freiwinkel resultieren, welche in der Zeichnungsfigur mit den Bezugszeichen α₀, α₁, α₂, α₃, α₄, α₅ gekennzeichnet sind.

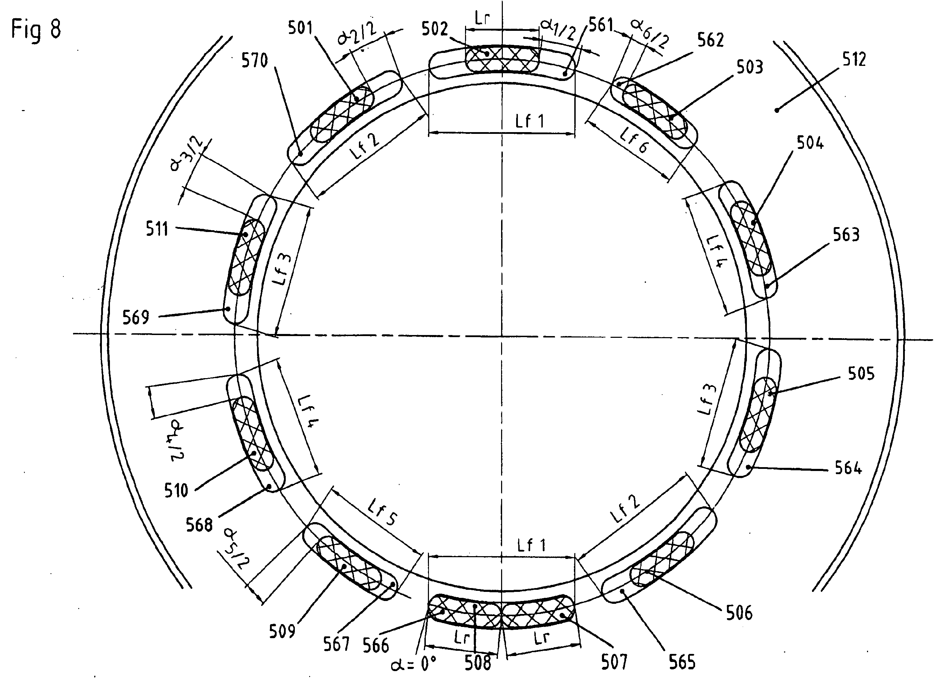

Die Figur 8 zeigt ein drittes Ausführungsbeispiel eines antriebsseitigen Halteblechs 512 eines Torsionsschwingungsdämpfers. Es sind Kulissenöffnungen 561, 562, 563, 564, 565, 566, 567, 568, 569, 570 mit unterschiedlicher Fensterlänge L_{f1}, L_{f2}, L_{f3}, L_{f4}, L_{f5}, L_{f6} vorgesehen. In diese Kulissenöffnungen 561, 562, 563, 564, 565, 566, 567, 568, 569, 570 sind Reibklötze 501, 502, 503, 504, 505 506, 507, 508, 509, 510, 511 mit einheitlicher Reibklotzlänge Lᵣ eingesetzt. Im vorliegenden Fall beträgt die Reibklotzlänge Lᵣ gerade die halbe Fensterlänge L_{f1} der Kulissenöffnung 566.

In diese Kulissenöffnung 566 sind im vorliegenden Ausführungsbeispiel zwei Reibklötze 507, 508 eingesetzt. Die Reibkraftübertragung erfolgt hier also spielfrei (Freiwinkel α₀ = 0°).

### Bezugszeichenliste

- 100: Torsionsschwingungsdämpfer
- 101: Stützblech
- 102: Reibklotz
- 103: Reibklotz
- 104: Reibklotz
- 105: Reibklotz
- 106: Reibklotz
- 107: Reibklotz
- 108: Reibklotz
- 109: Reibklotz
- 110: Reibklotz
- 111: Reibklotz
- 112: antriebsseitiges Halteblech (Sekundärelement)
- 113: Nabenplatte (Primärelement)
- 114: Tellerfeder
- 115: Sicherungsring
- 116: endseitiger Gleitschuh
- 117: endseitiger Gleitschuh
- 118: endseitiger Gleitschuh
- 119: endseitiger Gleitschuh
- 120: Gleitschuh
- 121: Gleitschuh
- 122: Gleitschuh
- 123: Gleitschuh
- 124: Gleitschuh
- 125: Gleitschuh
- 126: Gleitschuh
- 127: Gleitschuh
- 128: Gleitschuh
- 129: Gleitschuh
- 130: abtriebsseitiges Halteblech (Sekundärelement)
- 131: Tellerfeder
- 132: Eingangsnabe
- 133: Schraubenfeder
- 134: Schraubenfeder
- 135: Schraubenfeder
- 136: Schraubenfeder
- 137: Schraubenfeder
- 138: Schraubenfeder
- 139: Schraubenfeder
- 140: Schraubenfeder
- 141: Schraubenfeder
- 142: Schraubenfeder
- 143: Schraubenfeder
- 144: Schraubenfeder
- 145: Verzahnung
- 146: Verzahnung
- 147: Axialsteg
- 148: Axialsteg
- 149: Axialsteg
- 150: Axialsteg
- 151: Axialsteg
- 152: Axialsteg
- 153: Axialsteg
- 154: Axialsteg
- 155: Radialsteg
- 156: Radialsteg
- 157: Radialsteg
- 158: Radialsteg
- 159: Radialsteg
- 160: Radialsteg
- 161: Kulissenöffnung
- 162: Kulissenöffnung
- 163: Kulissenöffnung
- 164: Kulissenöffnung
- 165: Kulissenöffnung
- 166: Kulissenöffnung
- 167: Kulissenöffnung
- 168: Abstützbügel
- 169: Abstützbügel
- 170: Abstützbügel
- 171: Abstützbügel
- 172: Abstützbügel
- 173: Abstützbügel
- 174: Axialstegdurchführöffnung
- 175: Axialstegdurchführöffnung
- 176: Axialstegdurchführöffnung
- 177: Axialstegdurchführöffnung
- 178: Axialstegdurchführöffnung
- 179: Axialstegdurchführöffnung
- 180: Axialstegdurchführöffnung
- 181: Axialstegdurchführöffnung
- 182: Axialstegdurchführöffnung
- 183: Steckverzahnung
- 184: Steckverzahnung
- 185: Reibfläche
- 186: Reibfläche
- 187: Reibfläche
- 188: Reibfläche
- 189: Radialsteg
- 190: Radialsteg
- 191: Radialsteg
- 192: Radialsteg
- 193: Radialsteg
- 194: Radialsteg
- 195: Radialsteg
- 196: Radialsteg
- 197: Verzahnung

- α₀: Freiwinkel
- α₁: Freiwinkel
- L_{f}: Fensterlänge
- Lᵣ₀: Reibklotzlänge
- Lᵣ₁: Reibklotzlänge

- 200: Torsionsschwingungsdämpfer
- 201: Stützblech
- 202: Reibklotz

- 212: antriebsseitiges Halteblech (Sekundärelement)
- 213: Nabenplatte (Primärelement)
- 214: Tellerfeder
- 215: Sicherungsring
- 216: endseitiger Gleitschuh

- 220: Gleitschuh
- 221: Gleitschuh

- 230: abtriebsseitiges Halteblech (Sekundärelement)

- 233a: Außenfeder
- 233b: Innenfeder
- 234a: Außenfeder
- 234b: Innenfeder
- 235a: Außenfeder
- 235b: Innenfeder

- 247: Axialsteg

- 261: Kulissenöffnung
- 268: Abstützbügel

- 270: Abstützbügel

- 272: Abstützbügel

- 274: Axialstegdurchführöffnung
- 275: Axialstegdurchführöffnung
- 276: Axialstegdurchführöffnung
- 277: Axialstegdurchführöffnung

- 282: Steckverzahnung

- 285: Reibfläche
- 286: Reibfläche
- 287: Reibfläche
- 288: Reibfläche
- 289: Radialsteg

- α: Freiwinkel
- L_{f}: Fensterlänge
- Lᵣ: Reibklotzlänge

- 302: Reibklotz
- 303: Reibklotz
- 304: Reibklotz
- 305: Reibklotz

- 312: antriebsseitiges Halteblech (Sekundärelement)

- 361: Kulissenöffnung
- 362: Kulissenöffnung
- 363: Kulissenöffnung

- 364: Kulissenöffnung
- 368: Abstützbügel

- α₀: Freiwinkel
- α₁: Freiwinkel
- L_{f0}: Fensterlänge
- Lᵣ₀: Reibklotzlänge
- Lᵣ₁: Reibklotzlänge

- 402: Reibklotz
- 403: Reibklotz
- 404: Reibklotz
- 405: Reibklotz
- 406: Reibklotz
- 407: Reibklotz
- 408: Reibklotz
- 409: Reibklotz
- 410: Reibklotz
- 411: Reibklotz
- 412: antriebsseitiges Halteblech (Sekundärelement)

- 461: Kulissenöffnung
- 462: Kulissenöffnung
- 463: Kulissenöffnung
- 464: Kulissenöffnung
- 465: Kulissenöffnung
- 466: Kulissenöffnung
- 467: Kulissenöffnung
- 468: Kulissenöffnung
- 469: Kulissenöffnung
- 470: Kulissenöffnung

- α₀: Freiwinkel
- α₁: Freiwinkel
- α₂: Freiwinkel
- α₃: Freiwinkel
- α₄: Freiwinkel
- α₅: Freiwinkel
- L_{f}: Fensterlänge
- Lᵣ₀: Reibklotzlänge
- Lᵣ₁: Reibklotzlänge
- Lᵣ₂: Reibklotzlänge
- Lᵣ₃: Reibklotzlänge
- Lᵣ₄: Reibklotzlänge
- Lᵣ₅: Reibklotzlänge

- 501: Reibklotz
- 502: Reibklotz
- 503: Reibklotz
- 504: Reibklotz
- 505: Reibklotz
- 506: Reibklotz
- 507: Reibklotz
- 508: Reibklotz
- 509: Reibklotz
- 510: Reibklotz
- 511: Reibklotz
- 512: antriebsseitiges Halteblech (Sekundärelement)

- 561: Kulissenöffnung
- 562: Kulissenöffnung
- 563: Kulissenöffnung
- 564: Kulissenöffnung
- 565: Kulissenöffnung
- 566: Kulissenöffnung
- 567: Kulissenöffnung
- 568: Kulissenöffnung
- 569: Kulissenöffnung
- 570: Kulissenöffnung

- α₀: Freiwinkel
- α₁: Freiwinkel
- α₂: Freiwinkel
- α₃: Freiwinkel
- α₄: Freiwinkel
- α₅: Freiwinkel
- α₆: Freiwinkel
- L_{f1}: Fensterlänge
- L_{f2}: Fensterlänge
- L_{f3}: Fensterlänge
- L_{f4}: Fensterlänge
- L_{f5}: Fensterlänge
- L_{f6}: Fensterlänge
- Lᵣ: Reibklotzlänge

## Patentansprüche

1. Nasslaufender Torsionsschwingungsdämpfer (100, 200),
mit einem mit einer Antriebseinrichtung koppelbaren Primärelement (113, 213),
mit einem relativ zu diesem drehauslenkbaren abtriebsseitig koppelbaren korrespondierenden Sekundärelement (112, 130; 212, 230; 512),
mit einer zwischen Primärelement (113, 213) und Sekundärelement (112, 130; 212, 230; 512) wirksamen Reibvorrichtung,
bei welchem das Primärelement (113, 213) und/oder das Sekundärelement (112, 130; 212, 230; 512) Kulissenöffnungen (161, 162, 163, 164, 165, 166, 167; 261; 561, 562, 563, 564, 565, 567, 568, 569, 570) aufweist, in welche jeweils wenigstens ein Reibklotz (102, 103, 104, 105, 106, 107, 108, 109, 110, 111; 202; 502, 503, 504, 505, 506, 507, 508, 509, 510, 511, 512) der Reibvorrichtung in der Art eines Kulissensteins eingesetzt ist und
sich der wenigstens eine Reibklotz (102, 103, 104, 105, 106, 107, 108, 109, 110, 111; 202; 502, 503, 504, 505, 506, 507, 508, 509, 510, 511, 512) reibschlüssig gegen das korrespondierende Sekundärelement (112, 130; 212, 230; 512) oder Primärelement (113, 213) abstützt,
**dadurch gekennzeichnet, dass** Kulissenöffnungen (161, 162, 163, 164, 165, 166, 167; 261, 262; 561, 562, 563, 564, 565, 566, 567, 568, 569, 570) mit unterschiedlichen Fensterlängen (L_{f}, L_{f1}, L_{f2}, L_{f3}, L_{f4}, L_{f5}, L_{f6}) und Reibklötze (102, 103, 104, 105, 106, 107, 108, 109, 110, 111; 202; 502, 503, 504, 505, 506, 507, 508, 509, 510, 511, 512) mit einheitlichen Reibklotzlängen (Lᵣ) vorgesehen sind und wenigstens einer der Reibklötze (102, 103, 104, 105, 106, 107, 108, 109, 110, 111; 202; 502, 503, 504, 505, 506, 507, 508, 509, 510, 511, 512) Kunststoff und Glasfasern enthält.

2. Torsionsschwingungsdämpfer (100, 200) nach Anspruch 1,
**dadurch gekennzeichnet, dass** wenigstens zwei der Kulissenöffnungen (161, 162, 163, 164, 165, 166, 167, 261, 262; 561, 562, 563, 564, 565, 566, 567, 568, 569, 570) in Umfangsrichtung hintereinanderliegend angeordnet sind.

3. Torsionsschwingungsdämpfer (100, 200) nach einem der vorangegangenen Ansprüche,
**dadurch gekennzeichnet, dass** die Gesamtlänge (Lᵣ₀, Lᵣ + Lᵣ) der in wenigstens eine Kulissenöffnung (161, 162, 163, 164, 165, 166, 167; 261, 262; 561, 562, 563, 564, 565, 566, 567, 568, 569, 570) eingesetzten Reibklötze (507, 508) identisch mit der Fensterlänge (L_{f}; L_{f1}) der wenigstens einen Kulissenöffnung (566) ist.

4. Torsionsschwingungsdämpfer (100, 200) nach einem der vorangegangenen Ansprüche,
**dadurch gekennzeichnet, dass** wenigstens eine der Kulissenöffnungen (161, 162, 163, 164, 165, 166, 167; 261, 262; 561, 562, 563, 564, 565, 566, 567, 568, 569, 570) als Durchgangsöffnung ausgeführt ist und dass der wenigstens eine Reibklotz (102, 103, 104, 105, 106, 107, 108, 109, 110, 111; 202; 502, 503, 504, 505, 506, 507, 508, 509, 510, 511, 512) gegenüberliegende Reibflächen (187, 188; 287, 288) aufweist, mittels derer er (102, 103, 104, 105, 106, 107, 108, 109, 110, 111; 202; 502, 503, 504, 505, 506, 507, 508, 509, 510, 511, 512) sich gegen das korrespondierende Sekundärelement (112, 130; 212, 230; 512) oder das korrespondierende Primärelement reibschlüssig abstützt.

5. Torsionsschwingungsdämpfer (100, 200) nach einem der vorangegangenen Ansprüche,
**dadurch gekennzeichnet, dass** wenigstens eine der Kulissenöffnungen als Sackloch ausgeführt ist und dass der wenigstens eine Reibklotz eine auf dem Boden des Sacklochs aufsitzende Gleitfläche aufweist, auf welcher der Reibklotz reibungsarm gleitet sowie eine dieser Gleitfläche gegenüberliegende Reibfläche, mittels derer sich der Reibklotz gegen das korrespondierende Sekundär- und Primärelement reibschlüssig abstützt.

6. Torsionsschwingungsdämpfer (100, 200) nach Anspruch 5,
**dadurch gekennzeichnet, dass** das Sekundärelement (112, 130; 212, 230; 512) ein im Wesentlichen ringförmiges antriebsseitiges Halteblech (112, 212, 512) mit einer im Wesentlichen radial verlaufenden Bodenfläche aufweist, welche wenigstens eine der Kulissenöffnungen (161, 162, 163, 164, 165, 166, 167; 261; 561, 562, 563, 564, 565, 566, 567, 568, 569, 570) aufweist.

7. Torsionsschwingungsdämpfer (100, 200) nach Anspruch 6,
**dadurch gekennzeichnet, dass** das Primärelement (113, 213) ein ringförmiges Stützblech (101, 201) aufweist, welches antriebsseitig an das antriebsseitige Halteblech (112, 212, 512) anschließt, und an dem sich eine der Reibflächen (188, 288) des wenigstens einen Reibklotzes (102, 103, 104, 105, 106, 107, 108, 109, 110, 111; 202; 502, 503, 504, 505, 506, 507, 508, 509, 510, 511, 512) abstützt, sowie eine Nabenplatte (113, 213), welche abtriebsseitig an das antriebsseitige Halteblech (112, 212, 512) anschließt und an dem sich die andere (187, 287) der beiden Reibflächen (187, 188; 287, 288) des wenigstens einen Reibklotzes (102, 103, 104, 105, 106, 107, 108, 109, 110, 111; 202; 502, 503, 504, 505, 506, 507, 508, 509, 510, 511, 512) abstützt.

8. Torsionsschwingungsdämpfer (100, 200) nach Anspruch 7,
**dadurch gekennzeichnet, dass** das Stützblech (101, 201) Axialstege (147, 148, 149, 150, 151, 152, 153, 154; 247) und an diese Axialstege ((147, 148, 149, 150, 151, 152, 153, 154; 247) anschließende Radialstege (189, 190, 191, 192, 193, 194, 195, 196; 289) aufweist, welche das antriebsseitige Halteblech (112, 212, 512) und die Nabenplatte (113, 213) axial durchsetzen und dass eine Tellerfeder (114, 214) zwischen der Nabenplatte (113, 213) und den Radialstegen ((189, 190, 191, 192, 193, 194, 195, 196; 289) angeordnet ist, welche das Stützblech (101, 201) gegen die Nabenplatte (113, 213) und Reibschluss zu den Reibklötzen (102, 103, 104, 105, 106, 107, 108, 109, 110, 111; 202; 502, 503, 504, 505, 506, 507, 508, 509, 510, 511, 512) erzeugend gedrückt hält.

9. Torsionsschwingungsdämpfer (100, 200) nach Anspruch 8,
**dadurch gekennzeichnet, dass** ein Sicherungsring (115, 215) vorgesehen ist, welcher zwischen den Radialstegen (189, 190, 191, 192, 193, 194, 195, 196; 289) und der Tellerfeder (114, 214) angeordnet ist und welcher die Tellerfeder (114, 214) reibschlusserzeugend hält.

10. Torsionsschwingungsdämpfer (100, 200) nach einem der vorangegangenen Ansprüche,
**dadurch gekennzeichnet, dass** wenigstens einer der Reibklötze (102, 103, 104, 105, 106, 107, 108, 109, 110, 111; 202; 502, 503, 504, 505, 506, 507, 508, 509, 510, 511, 512) ein Kunststoffspritzteil ist.

11. Torsionsschwingungsdämpfer (100, 200) nach einem der vorangegangenen Ansprüche,
**dadurch gekennzeichnet, dass** wenigstens einer der Reibklötze (102, 103, 104, 105, 106, 107, 108, 109, 110, 111; 202; 502, 503, 504, 505, 506, 507, 508, 509, 510, 511, 512) ein Polyamid beinhaltet.

12. Torsionsschwingungsdämpfer (100, 200) nach einem der vorangegangenen Ansprüche,
**dadurch gekennzeichnet, dass** der Glasfaseranteil zwischen 40 % und 60 %, vorzugsweise 50 % beträgt.

## Claims

1. Wet-running torsional vibration damper (100, 200),
having a primary element (113, 213) which can be coupled to a drive unit,
having a corresponding secondary element (112, 130; 212, 230; 512) which can be deflected rotationally relative to said primary element and can be coupled to the drive output side,
having a friction device which acts between the primary element (113, 213) and secondary element (112, 130; 212, 230; 512),
in which wet-running torsional vibration damper the primary element (113, 213) and/or the secondary element (112, 130; 212, 230; 512) have/has slotted-guide openings (161, 162, 163, 164, 165, 166, 167; 261; 561, 562, 563, 564, 565, 567, 568, 569, 570) into which in each case at least one friction pad (102, 103, 104, 105, 106, 107, 108, 109, 110, 111; 202; 502, 503, 504, 505, 506, 507, 508, 509, 510, 511, 512) of the friction device is inserted in the manner of a sliding block, and
the at least one friction pad (102, 103, 104, 105, 106, 107, 108, 109, 110, 111; 202; 502, 503, 504, 505, 506, 507, 508, 509, 510, 511, 512) is supported in a frictionally engaging manner against the corresponding secondary element (112, 130; 212, 230; 512) or primary element (113, 213),
**characterized in that** the slotted-guide openings (161, 162, 163, 164, 165, 166, 167; 261, 262; 561, 562, 563, 564, 565, 566, 567, 568, 569, 570) with different window lengths (L_{f}, L_{f1}, L_{f2}, L_{f3}, L_{f4}, L_{f5}, L_{f6}) and friction pads (102, 103, 104, 105, 106, 107, 108, 109, 110, 111; 202; 502, 503, 504, 505, 506, 507, 508, 509, 510, 511, 512) with uniform friction pad lengths (Lᵣ) are provided, and at least one of the friction pads (102, 103, 104, 105, 106, 107, 108, 109, 110, 111; 202; 502, 503, 504, 505, 506, 507, 508, 509, 510, 511, 512) comprises plastic and glass fibres.

2. Torsional vibration damper (100, 200) according to Claim 1, **characterized in that** at least two of the slotted-guide openings (161, 162, 163, 164, 165, 166, 167; 261, 262; 561, 562, 563, 564, 565, 566, 567, 568, 569, 570) are arranged one behind the other in the circumferential direction.

3. Torsional vibration damper (100, 200) according to one of the preceding claims,
**characterized in that** the total length (Lᵣ₀, Lᵣ + Lᵣ) of the friction pads (507, 508) inserted into at least one slotted-guide opening (161, 162, 163, 164, 165, 166, 167; 261, 262; 561, 562, 563, 564, 565, 566, 567, 568, 569, 570) is identical to the window length (L_{f}; L_{f1}) of the at least one slotted-guide opening (566).

4. Torsional vibration damper (100, 200) according to one of the preceding claims,
**characterized in that** at least one of the slotted-guide openings (161, 162, 163, 164, 165, 166, 167; 261, 262; 561, 562, 563, 564, 565, 566, 567, 568, 569, 570) is designed as a through opening, and **in that** the at least one friction pad (102, 103, 104, 105, 106, 107, 108, 109, 110, 111; 202; 502, 503, 504, 505, 506, 507, 508, 509, 510, 511, 512) has opposing friction surfaces (187, 188; 287, 288) by means of which it (102, 103, 104, 105, 106, 107, 108, 109, 110, 111; 202; 502, 503, 504, 505, 506, 507, 508, 509, 510, 511, 512) is supported in a frictionally engaging manner against the corresponding secondary element (112, 130; 212, 230; 512) or the corresponding primary element.

5. Torsional vibration damper (100, 200) according to one of the preceding claims,
**characterized in that** at least one of the slotted-guide openings is formed as a blind hole and **in that** the at least one friction pad has a sliding surface, which is seated on the base of the blind hole and on which the friction pad slides with low friction, and a friction surface which is situated opposite said sliding surface and by means of which the friction pad supports the corresponding secondary and primary element in a frictionally engaging manner.

6. Torsional vibration damper (100, 200) according to Claim 5,
**characterized in that** the secondary element (112, 130; 212, 230; 512) has a substantially annular drive-input-side retaining plate (112, 212, 512) with a substantially radially running base surface which has at least one of the slotted-guide openings (161, 162, 163, 164, 165, 166, 167; 261; 561, 562, 563, 564, 565, 566, 567, 568, 569, 570).

7. Torsional vibration damper (100, 200) according to Claim 6,
**characterized in that** the primary element (113, 213) has an annular support plate (101, 201) which connects at the drive input side to the drive-input-side retaining plate (112, 212, 512) and on which one of the friction surfaces (188, 288) of the at least one friction pad (102, 103, 104, 105, 106, 107, 108, 109, 110, 111; 202; 502, 503, 504, 505, 506, 507, 508, 509, 510, 511, 512) is supported, and also a hub plate (113, 213) which connects at the drive output side to the drive-input-side retaining plate (112, 212, 512) and on which the other (187, 287) of the two friction surfaces (187, 188; 287, 288) of the at least one friction pad (102, 103, 104, 105, 106, 107, 108, 109, 110, 111; 202; 502, 503, 504, 505, 506, 507, 508, 509, 510, 511, 512) is supported.

8. Torsional vibration damper (100, 200) according to Claim 7,
**characterized in that** the support plate (101, 201) has axial webs (147, 148, 149, 150, 151, 152, 153, 154; 247) and, connected to said axial webs (147, 148, 149, 150, 151, 152, 153, 154; 247), radial webs (189, 190, 191, 192, 193, 194, 195, 196; 289) which extend axially through the drive-input-side retaining plate (112, 212, 512) and the hub plate (113, 213), and **in that** a plate spring (114, 214) is arranged between the hub plate (113, 213) and the radial webs (189, 190, 191, 192, 193, 194, 195, 196; 289) and holds the support plate (101, 201) pressed against the hub plate (113, 213) so as to produce frictional engagement with the friction pads (102, 103, 104, 105, 106, 107, 108, 109, 110, 111; 202; 502, 503, 504, 505, 506, 507, 508, 509, 510, 511, 512).

9. Torsional vibration damper (100, 200) according to Claim 8,
**characterized in that** a locking ring (115, 215) is provided which is arranged between the radial webs (189, 190, 191, 192, 193, 194, 195, 196; 289) and the plate spring (114, 214) and which holds the plate spring (114, 214) in a state in which it produces frictional engagement.

10. Torsional vibration damper (100, 200) according to one of the preceding claims,
**characterized in that** at least one of the friction pads (102, 103, 104, 105, 106, 107, 108, 109, 110, 111; 202; 502, 503, 504, 505, 506, 507, 508, 509, 510, 511, 512) is a plastic injection-moulded part.

11. Torsional vibration damper (100, 200) according to one of the preceding claims,
**characterized in that** at least one of the friction pads (102, 103, 104, 105, 106, 107, 108, 109, 110, 111; 202; 502, 503, 504, 505, 506, 507, 508, 509, 510, 511, 512) comprises a polyamide.

12. Torsional vibration damper (100, 200) according to one of the preceding claims,
**characterized in that** the glass fibre fraction is between 40% and 60%, preferably 50%.

## Revendications

1. Amortisseur de vibrations de torsion immergé dans un liquide (100, 200), comprenant :
un élément primaire (113, 213) pouvant être accouplé à un dispositif d'entraînement,
un élément secondaire (112, 130 ; 212, 230 ; 512) correspondant pouvant être accouplé du côté de la sortie et pouvant être dévié par rotation par rapport à celui-ci,
un dispositif de friction agissant entre l'élément primaire (113, 213) et l'élément secondaire (112, 130 ; 212, 230 ; 512),
l'élément primaire (113, 213) et/ou l'élément secondaire (112, 130 ; 212, 230 ; 512) présentant des ouvertures de coulisse (161, 162, 163, 164, 165, 166, 167 ; 261 ; 561, 562, 563, 564, 565, 567, 568, 569, 570), dans lesquelles est inséré à chaque fois au moins un bloc de friction (102, 103, 104, 105, 106, 107, 108, 109, 110, 111 ; 202 ; 502, 503, 504, 505, 506, 507, 508, 509, 510, 511, 512) du dispositif de friction à la manière d'un coulisseau et
l'au moins un bloc de friction (102, 103, 104, 105, 106, 107, 108, 109, 110, 111 ; 202 ; 502, 503, 504, 505, 506, 507, 508, 509, 510, 511, 512) s'appuyant par engagement par friction contre l'élément secondaire (112, 130 ; 212, 230 ; 512) ou l'élément primaire (113, 213) correspondant,
**caractérisé en ce que** des ouvertures de coulisse (161, 162, 163, 164, 165, 166, 167 ; 261, 262 ; 561, 562, 563, 564, 565, 566, 567, 568, 569, 570) avec des longueurs de fenêtre différentes (L_{f}, L_{f1}, L_{f2}, L_{f3}, L_{f4}, L_{f5}, L_{f6}) et des blocs de friction (102, 103, 104, 105, 106, 107, 108, 109, 110, 111 ; 202 ; 502, 503, 504, 505, 506, 507, 508, 509, 510, 511, 512) avec des longueurs de blocs de friction (Lᵣ) identiques sont prévus, et au moins l'un des blocs de friction (102, 103, 104, 105, 106, 107, 108, 109, 110, 111 ; 202 ; 502, 503, 504, 505, 506, 507, 508, 509, 510, 511, 512) contient du plastique et des fibres de verre.

2. Amortisseur de vibrations de torsion (100, 200) selon la revendication 1, **caractérisé en ce qu'**au moins deux des ouvertures de coulisse (161, 162, 163, 164, 165, 166, 167, 261, 262 ; 561, 562, 563, 564, 565, 566, 567, 568, 569, 570) sont disposées l'une derrière l'autre dans la direction périphérique.

3. Amortisseur de vibrations de torsion (100, 200) selon l'une quelconque des revendications précédentes,
**caractérisé en ce que** la longueur totale (Lᵣ₀, Lᵣ + Lᵣ) des blocs de friction (507, 508) insérés dans au moins une ouverture de coulisse (161, 162, 163, 164, 165, 166, 167 ; 261, 262 ; 561, 562, 563, 564, 565, 566, 567, 568, 569, 570) est identique à la longueur de fenêtre (L_{f}, L_{f1}) de l'au moins une ouverture de coulisse (566).

4. Amortisseur de vibrations de torsion (100, 200) selon l'une quelconque des revendications précédentes,
**caractérisé en ce qu'**au moins l'une des ouvertures de coulisse (161, 162, 163, 164, 165, 166, 167 ; 261, 262 ; 561, 562, 563, 564, 565, 566, 567, 568, 569, 570) est réalisée sous forme d'ouverture traversante et **en ce que** l'au moins un bloc de friction (102, 103, 104, 105, 106, 107, 108, 109, 110, 111 ; 202 ; 502, 503, 504, 505, 506, 507, 508, 509, 510, 511, 512) présente des surfaces de friction opposées (187, 188 ; 287, 288), au moyen desquelles il (102, 103, 104, 105, 106, 107, 108, 109, 110, 111 ; 202 ; 502, 503, 504, 505, 506, 507, 508, 509, 510, 511, 512) s'appuie contre l'élément secondaire correspondant (112, 130 ; 212, 230 ; 512) ou l'élément primaire correspondant par engagement par friction.

5. Amortisseur de vibrations de torsion (100, 200) selon l'une quelconque des revendications précédentes,
**caractérisé en ce qu'**au moins l'une des ouvertures de coulisse est réalisée sous forme de trou borgne et **en ce que** l'au moins un bloc de friction présente une surface de glissement reposant sur le fond du trou borgne, sur laquelle le bloc de friction glisse sans frottement, ainsi qu'une surface de friction opposée à cette surface de glissement, au moyen de laquelle le bloc de friction s'appuie par engagement par friction contre l'élément secondaire et l'élément primaire correspondants.

6. Amortisseur de vibrations de torsion (100, 200) selon la revendication 5, **caractérisé en ce que** l'élément secondaire (112, 130 ; 212, 230 ; 512) présente une tôle de retenue (112, 212, 512) du côté de l'entraînement, essentiellement annulaire, avec une surface de fond s'étendant essentiellement radialement, qui présente au moins l'une des ouvertures de coulisse (161, 162, 163, 164, 165, 166, 167 ; 261 ; 561, 562, 563, 564, 565, 566, 567, 568, 569, 570).

7. Amortisseur de vibrations de torsion (100, 200) selon la revendication 6, **caractérisé en ce que** l'élément primaire (113, 213) présente une tôle de support annulaire (101, 201), qui se raccorde du côté de l'entraînement à la tôle de retenue (112, 212, 512) du côté de l'entraînement, et sur laquelle s'appuie l'une des surfaces de friction (188, 288) de l'au moins un bloc de friction (102, 103, 104, 105, 106, 107, 108, 109, 110, 111 ; 202 ; 502, 503, 504, 505, 506, 507, 508, 509, 510, 511, 512), ainsi qu'une plaque de moyeu (113, 213), qui se raccorde du côté de la sortie à la tôle de retenue (112, 212, 512) du côté de l'entraînement et sur laquelle s'appuie l'autre (187, 287) des deux surfaces de friction (187, 188 ; 287, 288) de l'au moins un bloc de friction (102, 103, 104, 105, 106, 107, 108, 109, 110, 111 ; 202 ; 502, 503, 504, 505, 506, 507, 508, 509, 510, 511, 512).

8. Amortisseur de vibrations de torsion (100, 200) selon la revendication 7, **caractérisé en ce que** la tôle de support (101, 201) présente des nervures axiales (147, 148, 149, 150, 151, 152, 153, 154 ; 247) et des nervures radiales (189, 190, 191, 192, 193, 194, 195, 196 ; 289) se raccordant à ces nervures axiales (147, 148, 149, 150, 151, 152, 153, 154 ; 247), qui traversent axialement la tôle de retenue (112, 212, 512) du côté de l'entraînement et la plaque de moyeu (113, 213) et **en ce qu'**un ressort Belleville (114, 214) est disposé entre la plaque de moyeu (113, 213) et les nervures radiales (189, 190, 191, 192, 193, 194, 195, 196 ; 289), lequel retient sous compression la tôle de support (101, 201) contre la plaque de moyeu (113, 213) en produisant un engagement par friction avec les blocs de friction (102, 103, 104, 105, 106, 107, 108, 109, 110, 111 ; 202 ; 502, 503, 504, 505, 506, 507, 508, 509, 510, 511, 512).

9. Amortisseur de vibrations de torsion (100, 200) selon la revendication 8, **caractérisé en ce qu'**une bague de fixation (115, 215) est prévue, laquelle est disposée entre les nervures radiales (189, 190, 191, 192, 193, 194, 195, 196 ; 289) et le ressort Belleville (114, 214), et retient le ressort Belleville (114, 214) par engagement par friction.

10. Amortisseur de vibrations de torsion (100, 200) selon l'une quelconque des revendications précédentes,
**caractérisé en ce qu'**au moins l'un des blocs de friction (102, 103, 104, 105, 106, 107, 108, 109, 110, 111 ; 202 ; 502, 503, 504, 505, 506, 507, 508, 509, 510, 511, 512) est une pièce moulée par injection de plastique.

11. Amortisseur de vibrations de torsion (100, 200) selon l'une quelconque des revendications précédentes,
**caractérisé en ce qu'**au moins l'un des blocs de friction (102, 103, 104, 105, 106, 107, 108, 109, 110, 111 ; 202 ; 502, 503, 504, 505, 506, 507, 508, 509, 510, 511, 512) continent un polyamide.

12. Amortisseur de vibrations de torsion (100, 200) selon l'une quelconque des revendications précédentes,
**caractérisé en ce que** la proportion de fibres de verre est comprise entre 40% et 60%, de préférence vaut 50%.
